**Europäisches Patentamt**

**European Patent Office**

**Office européen des brevets**

(19)

(11) Publication number : **0 471 571 A2**

# (12) EUROPEAN PATENT APPLICATION

(21) Application number : **91307519.8**

(22) Date of filing : **14.08.91**

(51) Int. Cl.⁵ : **C08K 5/20,** C08L 23/02, C08J 5/18

(30) Priority : **17.08.90 GB 9018142**

(43) Date of publication of application :
**19.02.92 Bulletin 92/08**

(84) Designated Contracting States :
**AT BE CH DE DK ES FR GB GR IT LI NL SE**

(71) Applicant : **UNICHEMA CHEMIE BV**
**Buurtje 1**
**NL-2802 BE Gouda (NL)**

(72) Inventor : **Poels, Eduard Karel**
**Oude Rijn 128**
**NL-2312 HK Leiden (NL)**
Inventor : **Tierie, Eric Daniel**
**Burg. de Villeneuve Singel 14**
**NL-3055 AN Rotterdam (NL)**

(74) Representative : **Gambell, Derek et al**
**UNILEVER PLC Patents Division P.O. Box 68**
**Unilever House**
**London EC4P 4BQ (GB)**

(54) **Slip and antiblocking agent for polyolefin films.**

(57)    A process for preparing a slip and anti-blocking agent for polyolefin films is described. The process uses a fatty feed-stock comprising mono- and poly-unsaturated fatty acid species of which, calculated on the basis of equivalent fatty acid, more than 50% by weight is a fatty acid with at least 20 carbon atoms. The feed-stock may be a fatty acid as such, a fat or oil, or a fatty acid methyl ester. The process comprises the steps of (i) hydrogenating the fatty feed-stock sufficient to remove any poly-unsaturation but to retain some mono-unsaturation and, simultaneously or subsequently, (ii) amidating to produce a slip and anti-block agent with particularly good colour stability.

EP 0 471 571 A2

This invention relates to a process for preparing a slip and anti-blocking agent for polyolefin film, to a method of handling polyolefin films and to polyolefin films containing a slip and anti-blocking agent.

It has been standard practice for many years to use slip agents to reduce the coefficient of friction of the surface of polypropylene and polyethylene films. A high coefficient of friction (poor slip) results in the inability to slide one film layer over another. Reduction of the coefficient of friction allows smooth unwinding from the mill rolls commonly applied after the blowing of the polyolefin film facilitating further processing. Furthermore, this practice permits the processing of the films on high speed bag making machinery. Typical slip agents are unsaturated fatty acid amides such as erucamide or oleamide in approximately 0.02 - 0.5% by weight.

Another property of the polyolefin films to be avoided is the tendency of two or more film surfaces to adhere to each other while standing under pressure usually called blocking. Common anti-blocking agents include various waxes, soaps, silicon oxides, silica-aluminates and, again, fatty acid amides with 18 - 22 carbon atoms.

The application of fatty acid amides has advantages over use of inorganic materials as blocking agents. The difficulties with respect to handling and feeding of finely divided (0.01 - 10μm particles) solid in conventional metering equipment are avoided, ie. the severe dusting and accompanying personnel health hazards as well as the tendency of the material to act as a liquid rather than a particulate solid. Furthermore, it is clear to the observer that the appearance of the polyolefin film in many cases becomes somewhat hazy ie. it possesses a lower transparency and especially lower gloss upon use of inorganic powders as anti-blocking additive. Especially at higher concentrations and/or larger particle sizes of the material, loss of the desired transparency and optical sparkle is evident.

These stringent optical quality demands also necessitate a high thermal oxidation stability of the fatty acid amides used as slip and anti-blocking agents. In this light it is desirable to reduce the content of any readily oxidizable polyunsaturated fatty compounds which may be present.

It is an object of the present invention to provide a single additive for polyolefin films offering combined slip and anti-blocking properties without the use of inorganic anti-blocking agents such as silica powder and with considerably improved heat/colour stability in comparison with conventionally prepared fatty acid amides.

This object of the invention is achieved by the partial hydrogenation of certain unsaturated fatty acids and derivatives thereof.

Thus according to the invention, there is provided, a process for preparing a slip and anti-blocking agent for polyolefin films from fatty feed-stock comprising mono-and poly-unsaturated fatty acid species of which, calculated on the basis of equivalent fatty acid, more than 50% by weight is a fatty acid with at least 20 carbon atoms, the process comprising the steps of (i) hydrogenation of the fatty feed-stock sufficient to remove any poly-unsaturation but to retain some mono-unsaturation and, simultaneously or subsequently, (ii) amidation to produce a mixture of saturated and unsaturated amides.

The fatty feed-stock may be selected from fats and oils of animal and vegetable origin, fatty acids, especially those derived from the latter, and methyl esters of fatty acids.

The fatty feed-stock is preferably an erucic acid containing mixture, which may be derived from rape seed oil or the oil derived from crambe abyssinica and meadow foam. Other alternative unsaturated fatty acids include gadoleic (C20:1) and selacholeic (C24:1). Although it is possible for minor amounts of lower chain length fatty acids to be present, we prefer that the mixture comprises the equivalent of at least 65% by weight of fatty acids with at least 20 carbon atoms.

We prefer to use a fatty acid mixture as such for the fatty feed-stock. When, as an alternative, fats or oils, or fatty acid methyl esters are used, it will be necessary to insert an hydrolysis step in the process. This can conveniently be carried out following the hydrogenation and before amidation, or simultaneously with the amidation. The hydrolysis of fats, oils and fatty acid methyl esters is well known and such conventional techniques can be used in the present case.

We prefer to carry out the hydrogenation before the amidation.

The hydrogenation is preferably carried out with hydrogen and a metal catalyst, which may be selected from noble metals, nickel or copper containing catalysts, preferably dispersed on carbon or an inorganic oxide support. A particularly preferred catalyst is Pd on a carbon support. Ideally, the hydrogenation results in a weight ratio of saturated to mono-unsaturated fatty species of from 4:1 to 1:4, most preferably from 3:2 to 2:3. This mixture may then be subjected to amidation by methods known per se, such as by reaction with ammonia in the presence of a metal-containing catalyst, to yield a corresponding mixture of saturated and unsaturated fatty acid amides. A suitable catalyst is a titanium hydrate slurry.

It is this mixture of fatty acid amides which surprisingly acts both as a slip agent and as an anti-blocking agent for polyolefin films. We have found that, when the degree of hydrogenation is sufficient to remove the poly-unsaturation from the fatty feed-stock, the product contains a mixture of saturated and mono-unsaturated fatty amides in such proportions as would be desired for the product to act both as a slip agent and as an anti-block agent.

We are aware of US 3266924 (National Distillers and Chemical Corporation) which discloses that combined slip and anti-blocking properties can be imparted to polyethylene film by the use of conventionally prepared fatty acid amides, together with the use of finely divided siliceous material.

It is a further object of the present invention to avoid the use of siliceous material. Thus, according to a second aspect of the invention, there is provided a polyolefin film comprising, as a slip and anti-blocking agent, a mixture of saturated and unsaturated fatty acid amides at a weight ratio of 4:1 to 1:4, preferably from 3:2 to 2:3 prepared according to the process of the invention, substantially free of poly-unsaturated species and substantially free of siliceous material.

By "siliceous material" we mean a material selected from silica, zeolite and talc. Ideally, the film should be substantially free of any particulate inorganic material. By "substantially free" of siliceous material we mean containing less the 0.01%, preferably less than 0.001% by weight thereof.

We are aware of US 3474058 (National Distillers and Chemicals Corporation) which claims that improved slip properties for ethylene vinyl acetate copolymer are achieved by the addition of a metal salt of a saturated fatty acid and at least one $C_{12}$-$C_{22}$ fatty acid amide. Combined slip and anti-blocking properties are mentioned. The amides used are not prepared by hydrogenation of fatty acids.

By "substantially free of poly-unsaturated derivatives", we mean that the fatty acid amide mixture contains less than 1%, most preferably less than 0.1% thereof. Commercially available erucamide contains , typically 3% by weight of poly-unsaturated material, which according to the present invention is to be avoided. It therefore follows that mere admixture of, for example, commercially available erucamide and behenamide would produce an slip and anti-block agent which contained poly-unsaturated species. It is now thought that this reason lies behind the better colour stability of the slip and anti-block additive of the invention.

We are aware of US 3562291 (Fine Organics Inc) which discloses the slip properties of a mixture of erucamide with laurylamide.

US 3891587 (Goodyear) discloses the anti-blocking properties of synergistic combinations of stearamide or behenamide with paraffin wax.

JP 61281143 (Mitsubishi) teaches the addition of 0.01 - 1% by weight of an inorganic siliceous blocking agent to a polyethylene copolymer film, together with a mixture of saturated and unsaturated amides. JP 89008018 (Mitsubishi) is similar.

JP 85048504 (Asahi Electrochem) describes a mixture of saturated and unsaturated $C_{18}$ fatty acid amides prepared by amidation after the hydrogenation of rapeseed oil.

The polyolefin films to which the present invention is particularly applicable are polypropylene and polyethylene films.

## EXAMPLE

### i) Hydrogenation

Into 2.7 kg of technical erucic acid derived from rape seed oil having the following characteristics (weight %)

C22:0          2%
C22:1          89%
C22:2          1.7%
Iodine value      78

was stirred 1.08g of 4.94% Pd on carbon catalyst. The water content of this catalyst was about 50%, so that the Pd dosage to the fatty acid was 0.001%.

The catalyst containing erucic acid was charged into a 5l capacity autoclave, equipped with a vertical stirrer driven by a magnet. Hydrogen gas was introduced until the pressure in the autoclave was 15 bar. The autoclave was heated whilst stirring at a rate of about 120 movements per minute. The hydrogen consumption already started at 90°C during the heating up. After 30 minutes the temperature was 163°C and the hydrogen inlet was closed, about 40 litres of hydrogen having been consumed. At this temperature the iodine value had already fallen to 66.

During the next 45 minutes the temperature was increased to 172°C and the pressure dropped to 3 bar. The iodine value at this point was 59.

After another 70 minutes reaction at 172°C under 2 to 5 bar hydrogen, the autoclave was cooled to about 100°C and discharged. The iodine value of the filtered end product was 54.5. The C22:0 content was 26%, the C22:1 content was 66% and the C22:2 content was zero. The trans- content was about 45%.

3

ii) Amidation

The hydrogenated fatty acid from step (i) was placed in a round bottom flask together with 1.1% titanium hydrate slurry (33% solid) as a catalyst. Under normal pressure, ammonia gas was bubbled through at the rate of 1 mol ammonia to 1 mol fatty acid per hour, for 9.5 hours at 180°C. After this time-the acid value had fallen to 1.9.

The product was refined at 100 - 105°C in the presence of a mixture of sodium and potassium hydroxides (80% in excess of the free acid), 0.5% water, 1% bleaching earth and 0.25% "dicalite" filter aid.

The product was dried by evacuation at 105°C for 1 hour. It was filtered at 120°C and then subjected to molecular distillation at 180°C and $3 \times 10^{-3}$ mbar pressure.

The characteristics of the product were:

Acid value              0.22
Iodine value            51
Colour (Gardener '63)   0 - 1
Melting point           97.0°C

A thermal colour stability test showed better stability after 40 hrs at 100°C than commercial polymer grade erucamide alone and better than a mixture of commercially available erucamide and behenamide.

iii) Use in polyolefin film

Low density polyethylene films with a melt flow index of 2 and various thicknesses from 15 to 50 μm were used.

The product from step (ii) was applied to the film by adding to the molten polyolefin resin to a level of 1500 ppm (Example 1). The coefficient of friction and the anti-blocking properties at 60°C were measured. A comparison was made with the use of a mixture of 750 ppm commercial erucamide and 750 ppm silica (control).

The results were as follows:

| Film: | Example 1 | Control |
|---|---|---|
| Coefficient of friction | 0.22-0.18 | 0.22-0.18 |
| Reblocking (cN/75cm$^2$) | | |
| – 15μm | 35 | 60 |
| – 25μm | 30 | 50 |
| – 50μm | 15 | 30 |

These results show that the partially hydrogenated erucamide gave better anti-blocking properties than the control, without loss of slip characteristics.

**Claims**

1. A process for preparing a slip and anti-blocking agent for polyolefin films from fatty feed-stock comprising mono- and poly-unsaturated fatty acid species of which, calculated on the basis of equivalent fatty acid, more than 50% by weight is a fatty acid with at least 20 carbon atoms, the process comprising the steps of (i) hydrogenation of the fatty feed-stock sufficient to remove any poly-unsaturation but to retain some mono-unsaturation and, simultaneously or subsequently, (ii) amidation to produce a mixture of saturated and unsaturated amides.

2. A process according to Claim 1, wherein the fatty feed-stock is selected from fats and oils of animal and vegetable origin, fatty acids and methyl esters thereof.

3. A polyolefin film comprising, as a slip and anti-blocking agent, a mixture of saturated and unsaturated fatty acid amides at a weight ratio of 4:1 to 1:4, preferably from 3:2 to 2:3 prepared according to Claim 1, sub-

4

stantially free of polyunsaturated species and substantially free of siliceous material.

4. A method of handling polyolefin films characterised in that the film is pretreated with a mixture of saturated and unsaturated fatty acid amides in a weight ratio of 4:1 to 1:4, preferably from 3:2 to 2:3, prepared according to Claim 1, as a slip and anti-blocking agent.

5. The use of a mixture of saturated and unsaturated fatty acid amides, in a weight ratio of 4:1 to 1:4, preferably from 3:2 to 2:3, prepared according to Claim 1, as a slip and anti-blocking additive for polyolefin films.